# EUROPÄISCHE PATENTANMELDUNG

(11) **EP 0 952 518 A1**
(43) Veröffentlichungstag der Anmeldung: **27.10.1999**
(21) Anmeldenummer: 99101198.2
(22) Anmeldetag: 22.01.1999
(51) Int. Cl.: G06F 9/44, G05B 19/02

(54) **Programmierbare Steuerung**

(30) Priorität: 20.03.1998 DE 19812425
(71) Anmelder: Moeller GmbH, 53115 Bonn (DE)
(72) Erfinder: Hubert, Rolf, 53229 Bonn (DE); Högener, Jürgen, 53589 Niederkassel (DE); Bauerfeind, Dieter, 53177 Bonn (DE)

(57) **Zusammenfassung**

Programmierbare Steuerung mit einer Recheneinheit, einem Bildschirm 6, einer Bedieneinheit 4, 5 und mit Signaleingängen 2 und Signalausgängen 3, wobei die Recheneinheit, der Bildschirm 6, die Bedieneinheit 4, 5, die Signaleingänge 2 und Signalausgänge 3 in einem gemeinsamen Gehäuse 1 untergebracht sind und wobei Schaltfunktionen durch den Benutzer über eine menuegeführte Benutzeroberfläche auf dem Bildschirm 6 programmierbar sind, wobei die Sprache der menuegeführten Benutzeroberfläche veränderbar ist und wobei eine Sprache, insbesonders die englische Sprache, als Gerätesprache vorgegeben ist, in der die Benutzeroberfläche nach der erstmaligen Inbetriebnahme des Gerätes und nach einer Unterbrechung der Spannungsversorgung erscheint.

## Beschreibung

Die Erfindung betrifft eine programmierbare Steuerung mit einer Recheneinheit, einem Bildschirm, einer Bedieneinheit und mit Signaleingängen und Signalausgängen, wobei die Recheneinheit, der Bildschirm, die Bedieneinheit, die Signaleingänge und die Signalausgänge in einem gemeinsamen Gehäuse untergebracht sind und wobei Schaltfunktionen durch den Benutzer über eine menuegeführte Benutzeroberfläche auf dem Bildschirm programmierbar sind.

Es sind programmierbare Steuerungen bekannt, die über einen externen Rechner programmiert werden können. Dabei wird ein Programm auf dem externene Rechner erstellt und über eine Datenleitung in den Speicher der Steuerung geladen. Diese Art der Programmierung ist wegen der vom Rechner zur Verfügung gestellten Anwenderprogramme vergleichsweise komfortabel. Sie bedarf jedoch eines großen apparativen Aufwandes.

Weiterhin ist es bekannt, derartige Steuerungen über eine in die Steuerung integrierte Bedieneinheit unter der Kontrolle über den ebenfalls an der Steuerung befindlichen kleinen Bildschirm zu programmieren. Die Eingabe der Programmschritte ist auf diese Art vom Anwender direkt durchführbar, wobei die auf dem Bildschirm angezeigte Menueführung allerdings rudimentär im Vergleich zu der des externen Rechner ist. Wegen der geringen Abmessungen des Bildschirms und wegen der schlechtauflösenden Grafik ist es für den Anwender oft schwierig, die von der Menueführung angezeigten Funktionen, Fragen oder Befehle zu erkennen und umzusetzen. So muß der Anwender ständig in den mitgelieferten Bedienhandbüchern nachlesen, wie er die angezeigte Bedienaufforderung zu verstehen hat.

Aufgabe der Erfindung ist es daher eine programmierbare Steuerung der eingangs genannten Art zu schaffen, die dem Anwender einen höheren Bedien- bzw. Programmierkomfort bietet.

Diese Aufgabe wird durch die programmierbare Steuerung nach dem Kennzeichen des Anspruch 1 gelöst.

Durch die Möglichkeit, die Sprache (Landessprache) der menuegeführten Benutzeroberfläche zu verändern, wird den Bedürfnissen der Anwender in den verschiedenen Ländern Rechnung getragen. So ist es für den Anwender eine große Steigerung des Bedienkomforts, wenn er mit der Steuerung in der ihm vertrauten Landessprache kommunizieren kann. Durch diese Möglichkeit wird gleichfalls die Wahrscheinlichkeit einer Fehlprogrammierung verringert, so daß die Steuerung mit einer höheren Zuverlässigkeit arbeitet.

Da die erfindungsgemäße Menueführung für jeden Benutzer selbstredend ist, sind keine aufwendigen schriftlichen Bedienanleitungen mehr nötig, so daß mit der Möglichkeit der Sprachumstellung eine Reduzierung der Herstellungskosten einhergeht. Die Möglichkeit, die Landessprache der Menueführung umzustellen kann sich dabei einerseits auf die Benutzeroberfläche und andererseits auf die bereitgestellte Programmiersprache beziehen, so daß die normalerweise aus dem Englischen entlehnten Funktionsbezeichnungen (z.B. GOTO) in die Landessprache übersetzt werden (z.B. GEHZU).

In einer besonderen Ausführungsform ist der Steuerung eine bestimmte Sprache, z.B. die englische Landessprache, als Gerätesprache vorgegeben. In diese Gerätesprache meldet sich die Steuerung beim Benutzer, wenn das Gerät zum ersten mal eingeschaltet wird oder wenn die Spannungsversorgung unterbrochen wurde. Dabei ist es von Vorteil, als Gerätesprache die Englische Sprache vorzugeben, da diese Weltsprache ist und von dem Monteur, der die erste Inbetriebnahme vornimmt, verstanden wird. Durch den Einsatz einer Gerätesprache werden die Fertigungskosten der Steuerung weiter verringert, da nunmehr nur noch eine einzige Ausführungsform der Steuerung hergestellt werden braucht und diese in alle Länder geliefert werden kann. Dazu wird die Gerätesprache vom Hersteller in einem unveränderbaren Lesespeicher (ROM) in der Steuerung festgelegt.

Bei Verwendung der Gerätesprache ist es vorteilhaft, wenn die Benutzeroberfläche als zuerst erscheindenden Menuepunkt nach der Inbetriebnahme oder der Wiederherstellung der Verbindung zur Spannungsversorgung die Sprachauswahl vorsieht. Durch diese zwangsläufige erste Eingabemöglichkeit braucht sich der Anwender dabei nicht länger als unbedingt nötig mit einer unbekannten Sprache herumzuquälen. Ihm bleibt keine andere Wahl, als die ihm genehme Sprache zu wählen. Er kommt auch nicht in die Verlegenheit, die Sprachumstellungsfunktion suchen zu müssen.

Dabei ist es auch vorteilhaft, wenn die Gerätesprache solange beibehalten bleibt, wie keine aktive Eingabe erfolgt, solange der Anwender nicht bewußt eine andere Sprache wählt. Da als Gerätesprache eine Weltsprache vorgesehen ist, ist die Gefahr der Fehlbedienung minimiert. Die einmal eingestellte Sprache bleibt dem Gerät während des gesamten Betriebes bis zur aktiven Umstellung der Landessprache oder bis zum Ausschalten des Gerätes erhalten.

In einer vorteilhaften Ausführungsform der Steuerung ist die Sprachauswahl in jeder Betriebsphase möglich. Dadurch wird der größtmögliche Bedienkomfort für beliebige Benutzer verschiedener Muttersprachen gewährleistet. Dabei ist es besonders vorteilhaft, wenn die Sprachauswahl unabhängig von der momentanen Betriebsphase möglich ist und den laufenden Betrieb und/oder die Programmierung nicht beeinflußt.

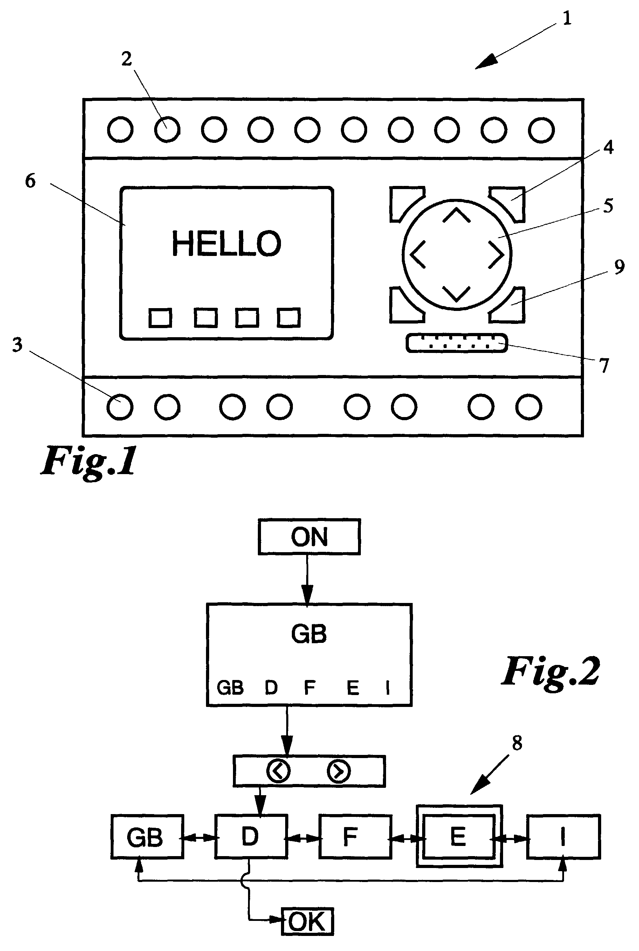

Ein Ausführungsbeispiel der erfindungsgemäßen Steuerung mit Sprachumstellung ist in den Figuren 1 und 2 dargestellt und wird im folgenden näher beschrieben. Es zeigen
- **Figur 1**: eine speicherprogrammierbare Steuerung und
- **Figur 2**: die Menueführung zur Sprachumstellung

In der Figur ist eine speicherprogrammierbare Steuerung mit einem Gehäuse 1 und mit einer Reihe von Spannungs Eingängen 2 und Spannungs Ausgängen 3 dargestellt. Die programmierte Steuerung schaltet unter Kontrolle eines Programmes den Stromfluß zwischen den Eingängen 2 und den Ausgängen 3. Das Programm kann der im Gehäuse 1 untergebrachten Recheneinheit mittels der Bedientasten 4 und der Mehrfunktionstaste 5 eingegeben werden. Die Eingabe und der Programmablauf sind auf dem Bildschirm 6 beobachtbar. Auf dem Bildschirm 6 ist während der Programmierung eine menuegeführte Benutzeroberfläche dargestellt. Mittels einer elektrischen Schnittstelle 7 kann die Steuerung von einem externen Rechner (PC) programmiert werden.

In Figur 2 ist die Menueführung zur Sprachumstellung dargestellt. Wird die Steuerung eingeschaltet bzw. die Spannungsversorgung angeschlossen, so meldet sich die Menueführung auf dem Bildschirm 6 in der vorgegebenen Gerätesprache (hier Englisch). Gleichzeitig bietet das Menue die Möglichkeit, über eine in beiden Richtungen durchführbare Durchschaltfunktion (Toggle), die mittels zweier alternativer Schaltfunktionen der Mehrfunktionstaste 5 ausgeführt wird, eine andere Landessprache (hier Deutsch, Französisch, Spanisch oder Italienisch) auszuwählen. Die momentan wählbare Sprache wird mit einer Umrandung 8 unterlegt. Die Wahl wird durch eine als Bestätigungstaste 9 ausgebildete Bedientasten 4 als neue Menuesprache bestätigt.

In einer besonderen Ausführungsform wird die Gerätesprache beibehalten, wenn innerhalb eines einstellbaren Zeitraumes von beispielsweise 30 Sekunden vom Benutzer keine andere Wahl getroffen wird.

## Patentansprüche

1. Programmierbare Steuerung mit einer Recheneinheit, einem Bildschirm (6), einer Bedieneinheit (4,5) und mit Signaleingängen (2) und Signalausgängen (3), wobei die Recheneinheit, der Bildschirm (6), die Bedieneinheit (4,5), die Signaleingänge (2) und Signalausgänge (3) in einem gemeinsamen Gehäuse (1) untergebracht sind und wobei Schaltfunktionen durch den Benutzer über eine menuegeführte Benutzeroberfläche auf dem Bildschirm (6) programmierbar sind,
**dadurch gekennzeichnet,** daß die Sprache der menuegeführten Benutzeroberfläche veränderbar ist.

2. Steuerung nach Anspruch 1,
**dadurch gekennzeichnet,** daß eine Sprache, insbesonders die englische Sprache, als Gerätesprache vorgegeben ist, in der die Benutzeroberfläche nach der erstmaligen Inbetriebnahme des Gerätes und nach einer Unterbrechung der Spannungsversorgung erscheint.

3. Steuerung nach Anspruch 2,
**dadurch gekennzeichnet,** daß die Gerätesprache vom Hersteller in einem unveränderbaren Lesespeicher (ROM) festgelegt ist.

4. Steuerung nach einem der vorherigen Ansprüche,
**dadurch gekennzeichnet,** daß die Benutzeroberfläche nach dem ersten Einschalten des Gerätes als erste Eingabemoglichkeit die Sprachauswahl vorsieht.

5. Steuerung nach Anspruch 4,
**dadurch gekennzeichnet,** daß die Gerätesprache beibehalten wird, solange keine aktive Eingabe erfolgt.

6. Steuerung nach einem der vorherigen Ansprüche,
**dadurch gekennzeichnet,** daß die Sprachauswahl in jeder Betriebsphase möglich ist.

7. Steuerung nach einem der vorherigen Ansprüche,
**dadurch gekennzeichnet,** daß die Sprachauswahl unabhängig von der momentanene Betriebsphase geschieht und den laufenden Betrieb und/oder die Programmierung nicht beeinflußt.

8. Steuerung nach einem der vorherigen Ansprüche,
**dadurch gekennzeichnet,** daß die ausgewählte Sprache bis zu einer erneuten Auswahl oder bis zum Ausschalten des Gerätes festgelegt ist.

9. Steuerung nach einem der vorherigen Ansprüche,
**dadurch gekennzeichnet,** daß als auswählbare Sprachen neben der englischen die deutsche, die französische, die spanische und/oder die italienische Sprache zur Verfügung stehen.
